# FASCICULE DE BREVET EUROPEEN

(11) **EP 2 606 711 B1**
(45) Date de publication et mention de la délivrance du brevet: **23.09.2015**
(21) Numéro de dépôt: 12358005.2
(22) Date de dépôt: 18.12.2012
(51) Int. Cl.: A01D 46/28

(54) **Procédé et dispositif de tri pneumatique de la récolte de petits fruits, et machine de récolte en faisant application**
Verfahren und Vorrichtung für das pneumatische Sortieren der Kleinobsternte, und Erntemaschine, bei der diese zum Einsatz kommen
Pneumatic sorting method and device for collecting small fruits, and harvesting machine using the same

(30) Priorité: 23.12.2011 FR 1104096
(43) Date de publication de la demande: 26.06.2013
(73) Titulaire: Pellenc SA, 84120 Pertuis (FR)
(72) Inventeur: Rolland, Christian, 84160 Cucuron (FR); Bouyou, Betrand, 23000 Jaen (ES)
(74) Mandataire: Marek, Pierre

(56) Documents cités:
- WO-A1-2010/095099
- FR-A1- 2 224 079
- FR-A1- 2 371 867
- FR-A2- 2 442 000
- US-A- 3 426 517
- US-B1- 6 216 876

## Description

La présente invention concerne un procédé et un dispositif de tri pneumatique de la récolte brute de petits fruits, afin d'en extraire les corps étrangers mêlés aux fruits, tels que pétioles, feuilles, fragments de feuilles, brindilles, insectes, etc. Elle vise également les machines de récolte faisant application de ces procédé et dispositif et permettant la récolte mécanisée des petits fruits produits en arboriculture fruitière.

Dans le domaine de l'oléiculture, plus particulièrement visé par l'invention, on connaît des machines permettant la récolte mécanisée ou « vendange » des olives. Il existe notamment, dans ce domaine, des machines de récolte découlant d'une évolution des machines à vendanger le raisin, du type le plus couramment utilisé, dans le but de les adapter à la spécificité des végétaux (arbres et arbustes) et des fruits produits par ceux-ci.

Ces machines sont munies d'une tête de récolte fixée de manière amovible ou non à un robuste châssis porteur.

Cette tête de récolte comprend un bâti enjambeur en forme de portique, ce bâti enjambeur supportant notamment, d'une part, un système de secouage constitué de deux ensembles de détachement des fruits montés en vis-à-vis et séparés par un espace ou couloir vertical, et, d'autre part, un système de réception et de convoyage pour recevoir les fruits détachés des arbres secoués et les acheminer jusqu'à un récipient récepteur de grande contenance, par exemple constitué par une benne installée de chaque côté et en partie haute du châssis de la machine équipée de la tête de récolte, ou par la benne d'un véhicule circulant à côté de ladite machine. Le système de réception et de convoyage des fruits détachés des arbres comprend deux ensembles symétriquement montés de part et d'autre du plan vertical médian de la tête de récolte.

On utilise actuellement principalement deux modes d'exécution du système de réception et de convoyage des fruits détachés par les têtes de récoltes de ce genre.

Selon l'un de ces modes de réalisation, ce système est constitué par deux ensembles de réception et de convoyage disposés de part et d'autre du plan vertical médian de la tête de récolte. Chacun de ces ensembles est réalisé sous forme d'une noria formée d'une succession de godets et configurée pour constituer à la fois un plan de collecte lors de son trajet horizontal inférieur et un convoyeur élévateur permettant d'acheminer les fruits recueillis jusqu'à la benne réceptrice de la récolte.

Selon ce mode de réalisation, les norias de godets récepteurs sont entrainées à une vitesse identique à celle de la vitesse d'avancement de la machine de récolte, de sorte que lesdits godets récepteurs ont, lors de leur trajectoire inférieure, une vitesse de déplacement nulle par rapport aux troncs ou pieds des arbres ou arbustes fruitiers avec lesquels ils se trouvent en contact.

Cette solution technique qui procure une bonne étanchéité lors du passage des piquets et des pieds des arbres ou arbustes, présente cependant plusieurs inconvénients.

Un premier inconvénient découle du fait que les godets récepteurs doivent nécessairement avancer à une vitesse égale à celle de la vitesse de déplacement de la machine, faute de quoi ces godets se trouveraient rapidement mis hors d'usage en raison des chocs qui résulteraient de leur entrée en contact avec les pieds des arbres ou arbustes. D'autre part, en cas de fort rendement, c'est-à-dire lorsque la récolte est abondante, la capacité limitée des godets ne permet pas de recevoir et d'acheminer le volume trop important de baies récoltées, laissant ces baies déborder des godets et tomber sur le sol.

Un autre inconvénient résulte du fait qu'il s'agit d'un système coûteux.

En outre, les godets sont relativement fragiles, de sorte qu'ils se trouvent exposés à une détérioration rapide, par exemple par suite d'un défaut de synchronisation entre la vitesse d'avancement de la machine et la vitesse de déplacement desdits godets ou en cas de patinage de ladite machine, par exemple sur des terrains détrempés.

D'autres procédés et machines de tri de la récolte brute de petits fruits tels que les olives, sont connus.

Notamment, a été proposé un dispositif de tri pneumatique portatif selon lequel, la récolte brute composée des petits fruits détachés des arbres et de corps étrangers d'origine diverse mêlés aux fruits et disposés au sol, est aspirée dans une enceinte étanche dans laquelle une dépression est maintenue au moyen d'une source de vide. La récolte brute est acheminée dans ladite enceinte étanche maintenue en dépression au moyen d'une conduite d'aspiration débouchant dans ladite enceinte étanche de sorte que, à leur sortie de ladite conduite d'aspiration, les petits fruits tombent par gravité en direction du fond de l'enceinte étanche tandis que les corps étrangers ou déchets plus légers sont aspirés par l'appareil à faire le vide disposé au dessus de l'aspiration et éjectés hors de ladite enceinte, à travers l'aspiration dudit appareil.

Dans le document US-6 216 876 est décrit un tel dispositif dans lequel la conduite d'aspiration d'une récolte brute disposée au sol (noix, noisettes, amandes, ...) pénètre dans l'enceinte étanche, en traversant le fond de celle-ci ; elle s'étend axialement à l'intérieur de ladite enceinte étanche et débouche au milieu ou mi-hauteur de celle-ci ; un déflecteur est disposé au-dessus et à distance de l'orifice de sortie de la conduite d'aspiration. La séparation des composants de la récolte s'opère dans l'enceinte étanche.

Toutefois, la situation au centre de l'enceinte étanche, de l'orifice de sortie de la conduite d'aspiration, le trajet du flux d'aspiration dans ladite enceinte, la présence du déflecteur conique placé au dessus, à distance et coaxialement à l'ouverture de sortie de la conduite d'aspiration, ne créent pas des conditions favorables à une bonne réception des composants de la récolte brute. D'autre part, la récolte directe au sol a l'inconvénient d'aspirer un grand nombre de déchets supplémentaires différents (cailloux, feuilles, poussières,) relativement à la quantité de produits récoltés, dont la quantité et la taille peuvent amener facilement l'obstruction du conduit d'aspiration.

Le document WO-2010/095099 décrit un système portable de séparation des composants de la récolte brute de petits fruits tels que des olives disposés au sol, lequel diffère principalement du dispositif divulgué dans le document US-6 216 876 par le fait que la séparation des fruits et des corps étrangers contenus dans la récolte brute n'est pas opérée à l'intérieur d'un récipient collecteur étanche mais à l'extérieur, à distance et au-dessus de la partie supérieure de ce récipient. Ce partage est en effet réalisé à l'intérieur d'un bloc séparateur constitué de trois branches tubulaires, soit : - une première branche tubulaire d'aspiration présentant, dans sa partie distale, un coude de l'ordre de 90° et communiquant, d'une part, avec une deuxième branche tubulaire, raccordée à la partie supérieure du récipient de collecte en formant un angle supérieur à 90° et, d'autre part, lesdites première et deuxième branches tubulaires communiquant avec une troisième branche tubulaire disposée dans le prolongement de la deuxième branche et formant, avec la première branche, un angle de l'ordre de 45°, ladite troisième branche tubulaire présentant un coude de l'ordre de 90° et étant raccordée à une source de vide.

Le trajet sinueux de l'air transportant les composants de la récolte et l'éloignement de la zone où se produit la séparation desdits composants ne permettent pas d'obtenir un tri de qualité, nécessite une puissance d'aspiration plus importante et l'aspiration directe au sol conduit à boucher régulièrement le conduit d'aspiration compte tenu de la diversité des déchets qui peuvent être aspirés.

Les appareils décrits dans les documents US-6.216.876 et WO-2010/095.099 sont des outils portables destinés à aspirer la récolte répandue sur le sol, ce qui a pour inconvénient d'aspirer également les débris de toute nature et taille diverses se trouvant sur le sol avant la chute des fruits, conduisant à aspirer une récolte surchargée de corps étrangers à éliminer, ce qui entraîne de fréquentes obstructions de l'orifice d'aspiration.

Le document FR-2 224 079 décrit une machine à vendanger par aspiration laquelle comprend une cuve étanche de réception dans laquelle débouchent des tuyaux d'aspiration dont l'extrémité libre est munie d'une tête de cueillette, une pompe à vide est reliée à la cuve étanche de réception et permet de faire le vide à l'intérieur de cette dernière, de sorte que les grappes détachées des ceps de vignes sont aspirées dans ladite cuve étanche, tandis que les corps étrangers légers sont aspirés par la pompe à vide et éjectés à l'extérieur par celle-ci.

Cette machine à vendanger est illustrée par deux vues extérieures et sa description est très sommaire, de sorte que ce document ne contient aucune information concernant le trajet de l'air chargé des composants de la récolte brute, ni concernant les emplacements où se produit la séparation de ces composants à l'intérieur de la cuve étanche de réception. Cette machine se rapporte en fait à une récolte manuelle au cours de laquelle, les vendangeurs coupent manuellement les grappes et les présentent devant les ouvertures d'aspirations, le but étant de dégrader le moins possible lesdites grappes avant le processus de vinification. Ainsi la quantité de déchets liés à ces grappes présentées manuellement est très faible, de sorte que la récolte ainsi transportée ne nécessite pas un tri de ses composants au sens de la présente invention.

La fiabilité insuffisante des dispositifs divulgués dans les documents susmentionnés explique l'absence de tels dispositifs sur le marché.

Un premier objectif de l'invention, est de proposer un procédé et un dispositif efficients de tri de la récolte de petits fruits permettant de réaliser, à la fois, la réception et le convoyage de la récolte brute et le tri des composants de celle-ci, dans une enceinte où elle sera stockée après séparation des déchets.

L'invention s'applique à un procédé et un dispositif de tri pneumatique selon lesquels la récolte brute composée des petits fruits détachés des arbres et de corps étrangers d'origines diverses (feuilles, fragments de feuilles, brindilles, insectes, etc.) issus de la végétation des arbres récoltés est réceptionnée sur un plan au dessus du sol puis aspirée dans une enceinte réceptrice étanche comportant une paroi supérieure et dans laquelle une dépression est maintenue au moyen d'une source de vide, par exemple constituée par un appareil à faire le vide dont l'aspiration est raccordée à une ouverture disposée à la partie supérieure de l'enceinte, la récolte brute étant acheminée dans cette enceinte maintenue en dépression au moyen d'une conduite d'aspiration débouchant dans ladite enceinte, de sorte que, à leur sortie de ladite conduite d'aspiration, les petits fruits tombent par gravité en direction du fond de l'enceinte, tandis que les corps étrangers ou déchets plus légers sont aspirés par l'appareil à faire le vide et éjectés hors de la dite enceinte.

Selon une première disposition caractéristique de l'invention, la conduite d'aspiration transportant la récolte brute en direction de l'enceinte étanche, débouche dans la partie supérieure de ladite enceinte, de façon tangente à la surface interne de la paroi supérieure de cette dernière, laquelle permet de guider les corps étrangers légers extraits de la récolte brute vers l'appareil à faire le vide tout en ralentissant les fruits plus lourds, sans les choquer, en favorisant leur chute au fond de l'enceinte étanche qui peut être constituée par une benne ou autre récipient.

De manière avantageuse, la paroi supérieure de l'enceinte présente une forme concave favorisant le guidage des corps étrangers légers vers l'appareil à faire le vide.

Les dispositions caractéristiques susmentionnées ont pour effet intéressant de ralentir le mouvement des fruits plus lourds que les corps étrangers, à la sortie de la conduite d'aspiration, ce qui évite de communiquer des chocs auxdits fruits et facilite leur retombée dans la benne ou autre type d'enceinte étanche, tandis que ce ralentissement a un effet limité en ce qui concerne lesdits corps étrangers.

De préférence, l'appareil à faire le vide est constitué par une turbine centrifuge.

Selon un mode d'exécution avantageux, la partie distale de la conduite d'aspiration pénètre à l'intérieur de l'enceinte étanche, la partie pénétrante de ladite conduite d'aspiration étant orientée en direction de l'aspiration de l'appareil à faire le vide.

Selon une autre disposition caractéristique, la conduite d'aspiration est constituée d'au moins deux tronçons séparables, dont un tronçon supérieur rigidement solidaire de la partie supérieure de l'enceinte.

Selon une autre disposition caractéristique, un déflecteur réglable est installé à distance réduite de l'appareil à faire le vide pour favoriser l'action d'extraction des feuilles et des corps étrangers légers mêlés aux petits fruits.

Selon un mode de réalisation avantageux, l'enceinte pouvant être fermée de façon étanche est constituée d'un récipient de stockage de grande contenance muni d'une trappe de vidage fixée au moyen d'une articulation avec une aptitude de liberté de basculement, à l'un des côtés dudit récipient dont la partie supérieure présente une section polygonale.

Selon une autre disposition caractéristique, la turbine d'aspiration est fixée en partie haute de l'enceinte de stockage, à l'opposé de l'articulation de la trappe de vidage, sur le bord supérieur de l'un des côtés du récipient de stockage.

Le dispositif de tri pneumatique de l'invention, est fixé sur une ossature porteuse et complété par les appareils nécessaires à son fonctionnement automatisé, ainsi qu'à la commande et à la gestion de ce fonctionnement, l'ensemble étant agencé pour constituer :
- soit une machine de tri fonctionnant à poste fixe, par exemple dans un local dédié à la réception de la récolte,
- soit une machine mobile automotrice ou tractée, telle qu'une machine à vendanger.

L'enceinte étanche de tri et de stockage est montée sur l'ossature porteuse avec une aptitude de basculement autour d'un axe horizontal, par exemple au moyen de tout dispositif d'articulation convenable connu en soi.

Un autre objectif de l'invention, est la réalisation d'une machine de récolte de petits fruits produits par des arbres ou arbustes fruitiers, en particulier des olives, dotée d'un système pneumatique et capable de réaliser, à la fois, la cueillette des olives ou autres fruits, le transfert de la récolte brute, d'une zone de réception des fruits détachés des arbres jusqu'à au moins une benne de stockage installée en partie haute de la machine, ainsi que le triage de cette récolte.

Selon l'invention, ce but est atteint grâce à une machine de récolte de petits fruits comprenant un dispositif de tri pneumatique tel que défini dans la revendication 2. De manière préférée, cette machine comporte encore une ou plusieurs des caractéristiques énoncées dans les revendications dépendantes 3 à 11.

En particulier, l'invention concerne une machine de récolte de petits fruits, du genre comportant, d'une part, une tête de récolte comprenant un bâti enjambeur en forme de portique fixé à un châssis porteur, ce bâti enjambeur supportant notamment un système de secouage constitué de deux ensembles de détachement des fruits, montés en vis-à-vis et séparés par un espace ou couloir vertical, et, d'autre part, un système de réception (plancher traversable) et de convoyage pour recevoir les fruits détachés des arbres secoués, ce système comprenant deux sous-ensembles parallèles et contigus montés en partie basse du châssis porteur, de part et d'autre du plan vertical médian de la machine, chacun de ces sous-ensembles comprenant une demi-partie du plancher traversable et un convoyeur à tapis horizontal disposé sur le côté externe de ladite demi-partie du plancher traversable et sur lequel est déversé la récolte brute recueillie par ladite demi-partie.

Cette machine de récolte est principalement remarquable en ce qu'elle comporte un dispositif pneumatique réalisant, à la fois, le convoyage de la récolte brute, le tri de celle-ci et le stockage des fruits triés. Ce dispositif comprend un convoyeur élévateur pneumatique constitué par une conduite tubulaire comportant une bouche d'aspiration inférieure disposée en regard et à proximité de la partie aval du brin actif du convoyeur à tapis horizontal, et une partie distale déversante débouchant dans la partie supérieure d'une benne de stockage dotée d'un moyen de fermeture étanche et à la partie supérieure de laquelle est connecté un appareil à faire le vide permettant la mise en dépression de ladite benne de stockage, de sorte à permettre l'aspiration des fruits transportés par le convoyeur à tapis, leur déversement dans ladite benne de stockage et leur chute par gravité en direction du fond de cette dernière à leur sortie du convoyeur élévateur pneumatique, les corps étrangers légers étant aspirés par ledit appareil à faire le vide et éjectés hors de ladite enceinte de stockage.

Selon une autre disposition caractéristique, l'extrémité inférieure du convoyeur élévateur pneumatique est munie d'une bouche d'appel d'air.

Les buts, caractéristiques et avantages ci-dessus, et d'autres encore, ressortiront mieux de la description qui suit et des dessins annexés dans lesquels :
- la figure 1 est une vue en coupe verticale et à caractère schématique du dispositif de tri pneumatique de petits fruits selon l'invention, représenté dans la position de mise en dépression,
- la figure 2 est une vue en coupe verticale et à caractère schématique de ce dispositif montré dans la position d'ouverture permettant le vidage de la benne de stockage de ce dispositif,
- la figure 3 est une vue en coupe analogue à la figure 1 et illustrant le fonctionnement du système de convoyage, de tri et de stockage selon l'invention,
- la figure 4 est une vue montrant ce dispositif dans la position de vidange de la benne de stockage,
- la figure 5 est une vue en perspective du dispositif de tri pneumatique selon l'invention,
- la figure 6 est une vue en perspective et en coupe longitudinale d'une machine à vendanger selon l'invention.

On se reporte auxdits dessins pour décrire des exemples avantageux, bien que nullement limitatifs, de mise en oeuvre du procédé et de réalisation du dispositif et des machines de récolte selon l'invention.

Selon le procédé de tri pneumatique de l'invention, la récolte brute R composée des petits fruits F détachés des arbres et de corps étrangers CE d'origine diverse (pétioles, feuilles, fragment de feuilles, brindilles, insectes, etc.) mêlés aux fruits, est aspirée dans une enceinte ou récipient étanche 1 comportant une paroi supérieure 11 et dans laquelle une dépression est maintenue au moyen d'une source de vide, par exemple constituée par un appareil à faire le vide 7. La récolte brute R est acheminée dans ladite enceinte étanche 1 maintenue en dépression au moyen d'une conduite d'aspiration 9 débouchant dans ladite enceinte étanche 1 de sorte que, à leur sortie de ladite conduite d'aspiration, les petits fruits F tombent par gravité en direction du fond de l'enceinte étanche tandis que les corps étrangers ou déchets plus légers CE sont aspirés par l'appareil à faire le vide 7 et éjectés hors de ladite enceinte, à travers l'aspiration dudit appareil.

Le procédé est notamment remarquable en ce que la conduite d'aspiration 9 débouche dans la partie supérieure 1 A de l'enceinte ou récipient 1 de façon tangente à la surface interne 11a de la paroi supérieure 11 dudit récipient, de sorte à coopérer un guidage des corps étrangers légers (CE) extraits de la récolte brute R en direction de l'appareil à faire le vide 7.

Autrement dit, la surface interne 11a de la paroi supérieure 11 de l'enceinte 1 et l'ouverture de déversement 9C de la conduite d'aspiration 9, sont réciproquement orientés, de sorte que le flux d'air transporteur chargé des composants de la récolte brute, est tangent à ladite surface interne à sa sortie de ladite ouverture.

De manière avantageuse, la surface interne 11a de la paroi supérieure 11 de récipient 1 présente une forme concave coopérant au bon guidage desdits corps étrangers CE en direction de l'appareil à faire le vide. De préférence et avantageusement, la surface interne concave 11a de la paroi supérieure 11 du récipient 1 présente une forme de coupole.

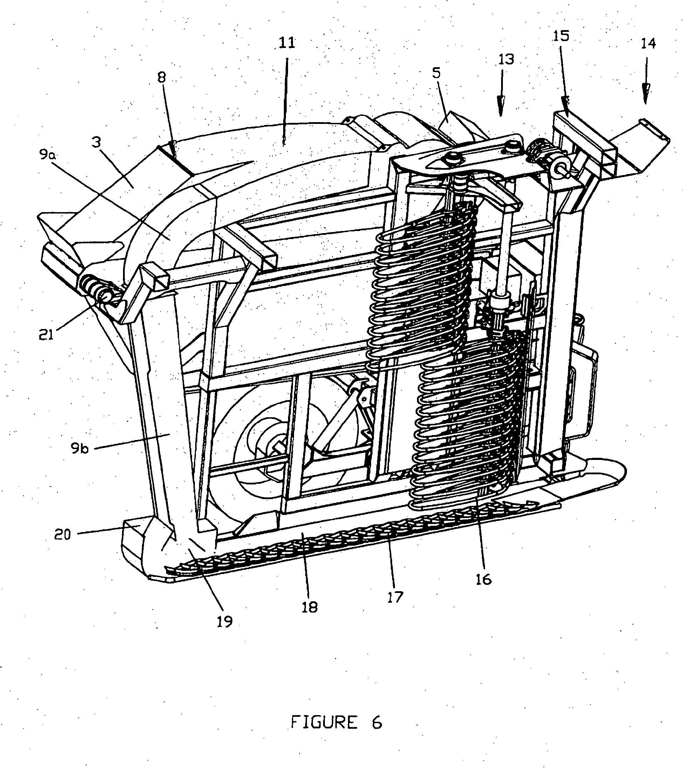

Selon une autre disposition caractéristique avantageuse du procédé et du dispositif de l'invention, la récolte brute R est réceptionnée sur un plan disposé au-dessus du sol, par exemple sur un convoyeur horizontal 18 d'une machine de récolte de petits fruits tels qu'olives (figure 6), avant d'être aspirée par le dispositif de tri pneumatique.

Grâce à cette particularité du procédé et du dispositif de tri pneumatique selon l'invention, la récolte n'est pas aspirée sur le sol de sorte qu'elle est uniquement composée de fruits et déchets directement issus des arbres sur lesquels on effectue la récolte. Tout ce qui tombe des arbres est réceptionné sur un plan situé au-dessus du sol, de sorte que la composition de la récolte brute peut être connue et plus facilement gérable pour obtenir un fonctionnement efficace du système d'aspiration et de tri selon l'invention.

Le dispositif de tri pneumatique permettant la mise en oeuvre de ce procédé, comprend une enceinte 1 constituée d'un récipient de stockage 2 comportant une partie supérieure 1A fermée par une paroi supérieure 11 et une ouverture supérieure de vidange 4 munie d'une trappe 3 d'obturation étanche de ladite ouverture supérieure 4. Le bord supérieur délimitant l'ouverture du récipient de stockage 1 et la bordure inférieure de la trappe 3 destinée à se trouver au contact dudit bord supérieur, dans la position de fermeture, sont munis de moyens de jonction hermétique. À sa partie supérieure, l'enceinte 1 est pourvue d'une ouverture d'éjection 5 connectée à la bouche d'aspiration 6 d'un appareil à faire le vide 7.

Cette source de vide 7 installée à la partie supérieure de l'enceinte 1 permet de créer et de maintenir une dépression à l'intérieur de ladite enceinte lorsque l'ouverture supérieure 4 de celle-ci est obturée de manière étanche par la trappe 3.

La trappe de vidage 3 est fixée au bord supérieur de l'un des côtés du récipient de stockage 2 au moyen d'une articulation 8 horizontale, par exemple constituée par des charnières. Avantageusement, l'ouverture de vidage 4 et la trappe 3, sont disposées à l'opposé de l'emplacement de fixation de l'appareil à faire le vide 7.

Un transporteur pneumatique constitué par une conduite d'aspiration 9 débouchant dans l'enceinte 1 permet l'aspiration de la récolte brute et son transfert dans ladite enceinte 1 lorsque celle-ci est fermée de manière étanche et maintenue en dépression.

Selon une disposition caractéristique du dispositif de tri pneumatique de l'invention, le tronçon supérieur 9a de la conduite d'aspiration 9 de la récolte brute R débouche dans la partie supérieure 1A du récipient 1, de façon tangente à la surface interne 11a de ladite paroi supérieure 11.

Lorsque la récolte brute R est déchargée dans l'enceinte 1 mise en dépression, les petits fruits F tombent, par gravité, en direction du fond de ladite enceinte qui constitue ainsi un récipient ou benne de stockage, tandis que les corps étrangers CE plus légers sont aspirés par l'appareil à faire le vide 7 et sont éjectés hors de l'enceinte de stockage 1 à travers l'ouverture 5 connectée à l'aspiration dudit appareil.

Avantageusement, la surface interne 11a de la paroi supérieure 11 du récipient de stockage 2 est de forme concave de sorte à diriger les corps étrangers CE légers vers l'appareil à faire le vide 7 afin de les évacuer du dispositif à travers l'ouverture d'éjection 5.

De préférence, l'appareil à faire le vide 7 est constitué par une turbine centrifuge dont l'aspiration est raccordée à l'ouverture d'éjection 5 prévue en partie haute de l'enceinte 1.

Selon un mode d'exécution avantageux, la partie distale 10 de la conduite d'aspiration 9 pénètre à l'intérieur de l'enceinte étanche 1, à distance de l'appareil à faire le vide 7, cette partie distale pénétrante 10 étant orientée en direction de l'aspiration de ce dernier.

L'ouverture de déversement 9C de la conduite d'aspiration 9 est disposée à un niveau sensiblement identique à celui où se trouve située l'ouverture d'éjection 5, de sorte que la trajectoire du flux d'air entre lesdites ouvertures 9C et 5 est rectiligne et approximativement horizontale.

Selon une autre disposition caractéristique, la conduite d'aspiration 9 est constituée d'au moins deux tronçons 9a, 9b séparables, dont un tronçon supérieur 9a rigidement solidaire de l'enceinte 1.

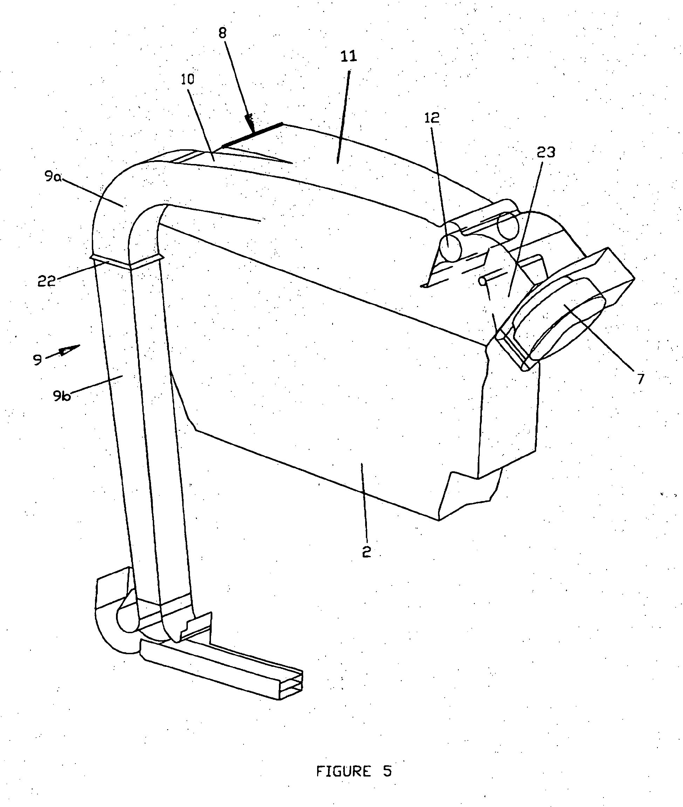

Comme le montre la figure 5, le tronçon 9b solidaire d'une partie fixe de la machine équipée du dispositif de tri pneumatique et la partie distale 10 du tronçon 9a solidaire de la partie supérieure 1A de l'enceinte 1, sont disposés dans les plans verticaux décalés, de sorte que ledit tronçon 9a comporte une portion inclinée entre ses deux parties extrêmes.

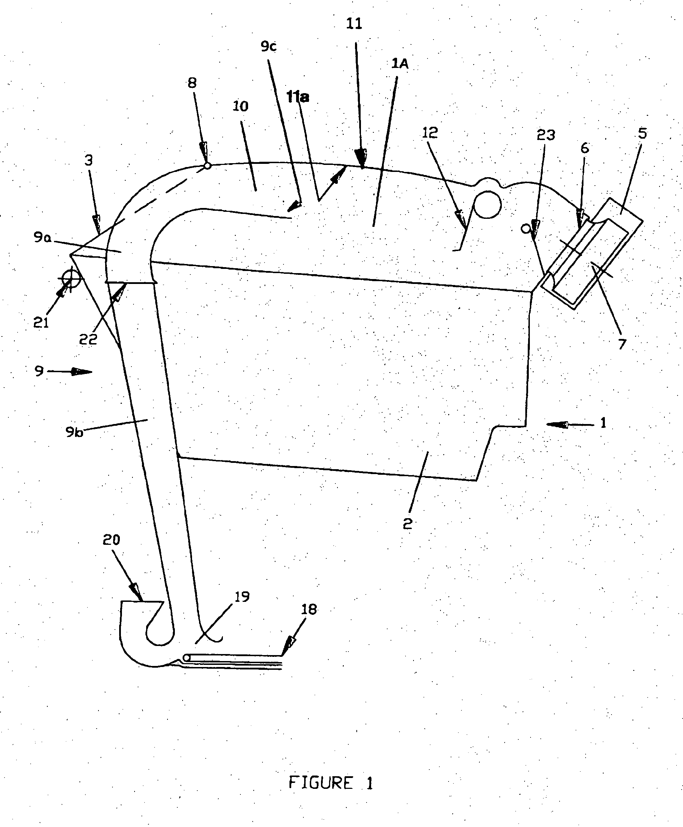

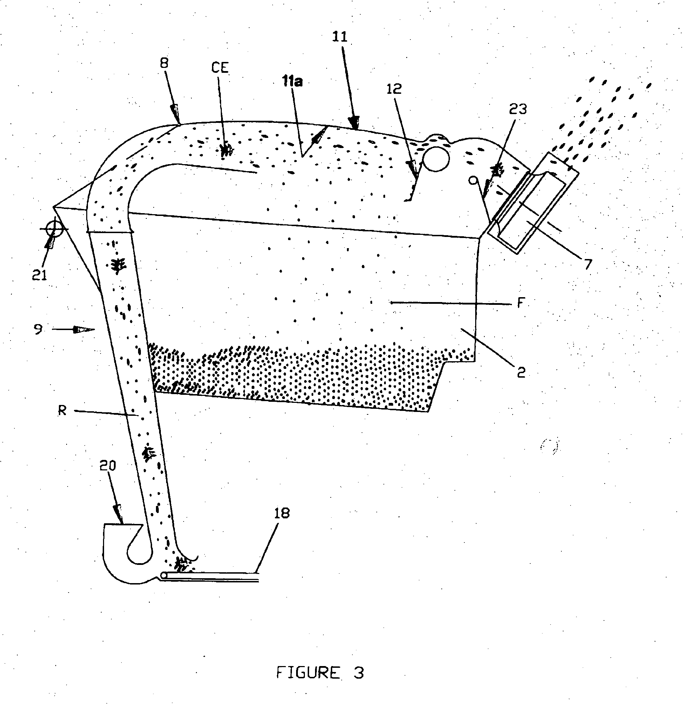

En position de fermeture de l'enceinte, lors des opérations de triage de la récolte, les deux tronçons 9a, 9b se trouvent assemblés de manière étanche, par exemple par emboitement de l'extrémité inférieure du tronçon supérieur 9a, dans l'extrémité supérieure du tronçon inférieur 9b (figures 1 et 3).

Avantageusement, l'extrémité inférieure du tronçon supérieur 9a et l'extrémité supérieure du tronçon inférieur 9b appelées à être assemblées sont munies de joints d'étanchéité 22.

En position de déchargement de l'enceinte de stockage, lors du vidage de cette dernière, la turbine d'aspiration 7 est arrêtée, ladite enceinte est basculée et les tronçons 9a, 9b de la conduite d'aspiration 9 se séparent. Ils se trouvent ensuite de nouveau assemblés de manière étanche après basculement de l'enceinte en sens contraire.

Selon une autre disposition caractéristique, un déflecteur réglable 12 est installé en regard de l'ouverture de déchargement de la partie distale 10 de la conduite d'aspiration 9 pénétrant à l'intérieur de l'enceinte étanche 1, et à distance réduite de l'appareil à faire le vide 7 pour favoriser l'action d'extraction des feuilles et des corps étrangers légers, ce déflecteur est par exemple constitué par un volet mobile monté pivotant autour d'un axe horizontal, par l'intermédiaire de son bord supérieur.

Si on considère que les fruits arrivent dans l'enceinte 1 avec des vitesses différentes en fonction de leur quantité, et/ou de leur position, et/ou de leur masse, dans la conduite d'aspiration 9, le déflecteur 12, du fait de son inclinaison par rapport au flux de fruits pouvant arriver sur lui, permet d'éviter qu'une certaine quantité de fruits soit aspirée par la turbine centrifuge. Ce déflecteur 12 peut être plus ou moins incliné, de façon à stopper les fruits qui vont, grâce à leur vitesse annulée par le déflecteur et leur masse, tomber dans la benne, et à convoyer les feuilles ou autres déchets légers le long dudit déflecteur avant d'être aspirés par la turbine centrifuge. Le réglage de la position du déflecteur 12 peut être obtenu à l'aide de tout système approprié connu de l'homme de l'art, à partir d'un pupitre de commande du fonctionnement du dispositif de tri.

Selon une autre disposition caractéristique de l'invention, un déflecteur fixe 23 est disposé en regard du déflecteur réglable 12, à la base de l'appareil à faire le vide 7.

De la sorte, si des fruits F venaient à passer le premier déflecteur 12 en empruntant le même chemin que les corps étrangers CE à trier, ce second déflecteur 23 permet à ces fruits de tomber dans le récipient de stockage 2, sans être de nouveau aspirés par l'appareil à faire le vide 7.

Le dispositif de tri pneumatique selon l'invention est fixé sur une ossature porteuse et l'enceinte étanche 1 de tri et de stockage est monté sur cette ossature, avec une aptitude de basculement autour d'un axe horizontal 21, par exemple par l'intermédiaire de tout système d'articulation approprié. Ce basculement peut être opéré, de manière connue en soi, au moyen d'au moins un vérin hydraulique ou autre (non représenté).

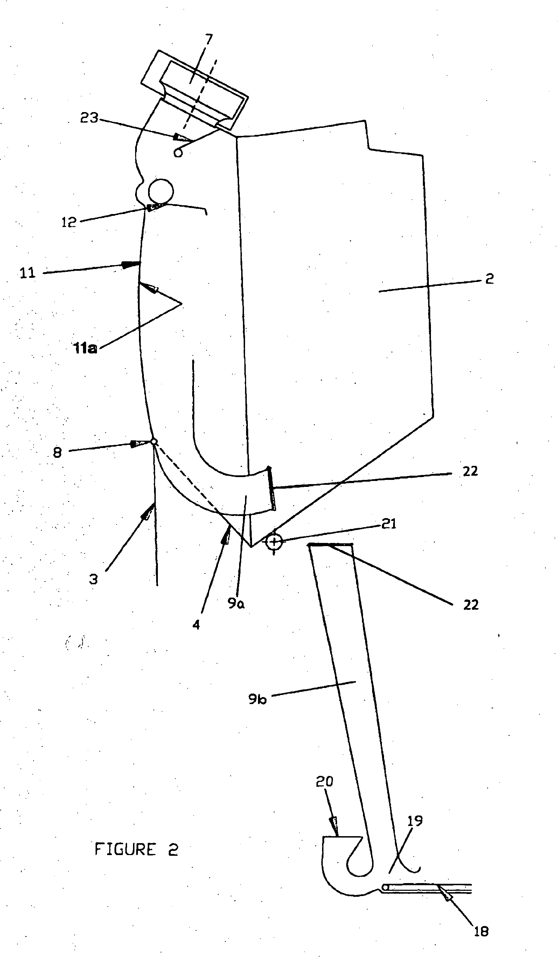

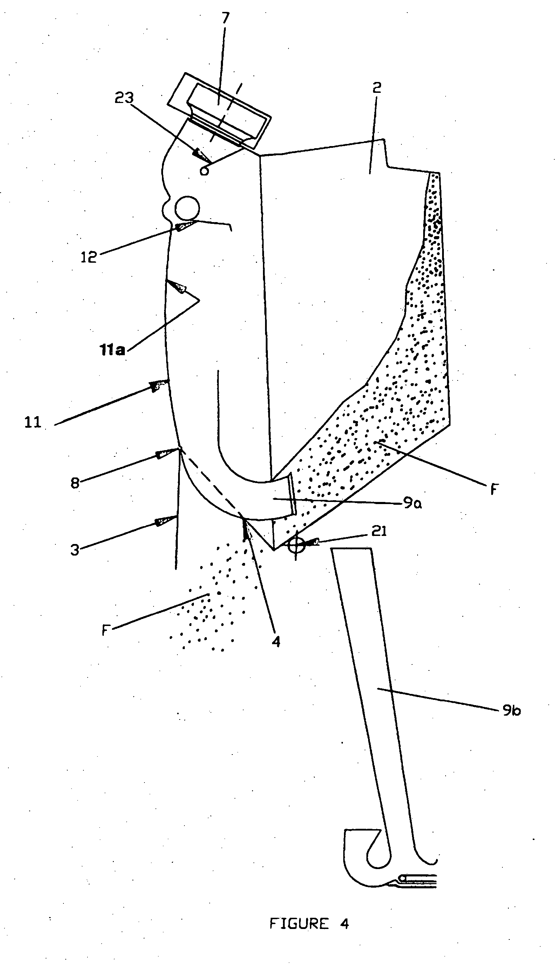

L'axe d'articulation 8 de la trappe de fermeture 3 est parallèle à l'axe de basculement 21 de l'enceinte 1. D'autre part, l'axe d'articulation 8 de la trappe basculante 3 est disposé à un niveau supérieur à celui où se trouve l'axe d'articulation 21 de la benne ou autre récipient 2. De la sorte, la trappe 3 s'ouvre automatiquement, par action de la gravité, lorsque ladite enceinte est basculée dans le sens de l'ouverture et de la vidange de la récolte (figures 2 et 4), et elle se ferme automatiquement lorsque l'enceinte est basculée en sens contraire (figures 3 et 5).

Avantageusement, les bordures de la trappe de vidage 3 et de l'ouverture 4 appelées à être en contact sont munies de joints d'étanchéité 22 représentés schématiquement. De la sorte, lorsque l'appareil à faire le vide 7 est mis en route, la dépression qui est créée à l'intérieur de l'enceinte 1 assure la fermeture étanche de ladite trappe 3.

En situation de fermeture, l'axe d'articulation 8 de la trappe se trouve placé à un niveau supérieur par rapport à l'axe de basculement 21 de l'enceinte ou benne 1.

L'invention concerne aussi les machines de récolte et les machines de tri de petits fruits faisant application du procédé et du dispositif de tri pneumatique décrits ci-dessus, ces machines pouvant être :
- soit une machine de tri fonctionnant à poste fixe, par exemple dans un local dédié à la réception de la récolte, opérée par une machine à vendanger ;
- soit une machine de récolte mobile, automotrice ou tractée.

En particulier, l'invention concerne une machine de récolte de petits fruits du genre comportant, d'une part, une tête de récolte 13 comprenant un bâti enjambeur 14 en forme de portique fixé à un châssis porteur 15, ce bâti enjambeur supportant notamment un système de secouage constitué de deux ensembles 16 de détachement des fruits, montés en vis-à-vis et séparés par un espace ou couloir vertical, et, d'autre part, un système de réception (plancher traversable) et de convoyage pour recevoir les fruits détachés des arbres secoués, ce système comprenant deux sous-ensembles parallèles et contigus montés en partie basse du châssis porteur, de part et d'autre du plan vertical médian de la machine, chacun de ces sous-ensembles comprenant une demi-partie 17 du plancher traversable et un convoyeur à tapis horizontal 18 disposé sur le côté externe de ladite demi-partie du plancher traversable et sur lequel est déversée la récolte brute recueillie par ladite demi-partie.

Cette machine de récolte est principalement remarquable en ce qu'elle comporte un dispositif pneumatique comportant les dispositions caractéristiques exposées ci-dessus lui permettant de réaliser, à la fois, la réception de la récolte brute R, le convoyage de ladite récolte brute, le tri de celle-ci et le stockage des fruits triés. Ce dispositif comprend un convoyeur élévateur pneumatique comportant les dispositions caractéristiques exposées ci-dessus et 9 constitué par une conduite tubulaire comportant une bouche d'aspiration inférieure 19 disposée en regard et à proximité de la partie aval du brin actif du convoyeur à tapis horizontal 18, et une partie distale déversante 10 débouchant dans une enceinte constituée par une benne de stockage 1 dotée d'un moyen de fermeture étanche 3 et à la partie supérieure de laquelle est connecté un appareil à faire le vide 7 permettant la mise en dépression de ladite benne de stockage, de sorte à permettre l'aspiration de la récolte brute R transportée par le convoyeur à tapis 18, son déversement dans ladite benne de stockage 1, et le tri des petits fruits F et leur chute par gravité en direction du fond de cette dernière à leur sortie du convoyeur élévateur pneumatique 9, les corps étrangers légers CE étant aspirés par ledit appareil à faire le vide et éjectés hors de ladite enceinte de stockage, à travers l'aspiration dudit appareil à faire le vide. La conduite d'aspiration 9 de la récolte brute R débouche dans la partie supérieure 1A de la benne 1, de façon tangente à la surface supérieure interne 11a de la paroi supérieure 11 de ladite benne laquelle présente, préférentiellement une forme concave permettant de diriger les corps étrangers légers CE extraits de la récolte brute vers l'appareil à faire le vide 7.

Une telle machine de récolte comprend deux systèmes de convoyage et de tri de la récolte disposés latéralement, de part et d'autre du plan vertical médian de la machine et, chacun de ces dispositifs de convoyage et de tri pneumatiques comporte, par ailleurs, une ou plusieurs des autres caractéristiques avantageuses précédemment décrites.

La partie inférieure ou partie amont du convoyeur élévateur pneumatique 9 peut être avantageusement munie d'une bouche d'appel d'air 20.

Les figures 4 et 5 illustrent les étapes du procédé de l'invention et le fonctionnement du dispositif de convoyage et de tri de la récolte équipant la machine de récolte précédemment décrite.

Sur la figure 4, on voit la récolte brute réceptionnée et transportée par le convoyeur à tapis horizontal 18, cette récolte R étant composée de fruits F et de corps étrangers CE d'origine diverse. À son arrivée dans la partie aval du convoyeur à tapis 18, la récolte R est aspirée dans la benne de stockage 1 fermée et mise en dépression, via le transporteur élévateur 9. À leur sortie de l'extrémité aval du convoyeur élévateur, constituée par la partie pénétrante 10 de celui-ci, les fruits F tombent par gravité en direction du fond de la benne de stockage, tandis que les corps étrangers CE sont aspirés par la turbine centrifuge 7 et éjectés par l'intermédiaire de celle-ci hors de ladite benne de stockage 1.

La figure 5 montre le vidage de la benne. Celle-ci est basculée autour de son axe d'articulation 21 sur le châssis porteur 15 et s'ouvre automatiquement lors de son basculement, par ouverture de la trappe 3, sous l'effet de la gravité, autour de son axe d'articulation 8.

## Revendications

1. Procédé de tri pneumatique de la récolte de petits fruits, selon lequel la récolte brute (R) composée des petits fruits (F) détachés des arbres et de corps étrangers (CE) d'origine diverse (pétioles, feuilles, fragments de feuilles, brindilles, insectes, etc.) mêlés aux fruits, est aspirée dans une enceinte (1) étanche comportant une paroi supérieure (11) et dans laquelle une dépression est maintenue au moyen d'une source de vide, par exemple constituée par un appareil à faire le vide (7), la récolte brute (R) étant acheminée dans ladite enceinte (1) étanche maintenue en dépression, au moyen d'une conduite d'aspiration (9) de ladite récolte brute (R) débouchant dans ladite enceinte étanche (1), de sorte que, à leur sortie de ladite conduite d'aspiration, les petits fruits (F) tombent par gravité en direction du fond de l'enceinte étanche tandis que les corps étrangers (CE) ou déchets plus légers sont aspirés par l'appareil à faire le vide (7) et éjectés hors de ladite enceinte à travers l'aspiration dudit appareil, **caractérisé en ce que** la conduite d'aspiration (9) débouche dans la partie supérieure (1A) de l'enceinte étanche (1), de façon tangente à la surface interne (11a) de ladite paroi supérieure (11).

2. Dispositif de tri pneumatique de la récolte de petits fruits, comprenant une enceinte (1) constituée d'un récipient de stockage (2) comportant une partie supérieure (1A) fermée par une paroi supérieure (11) et une ouverture supérieure de vidage (4) munie d'une trappe (3) d'obturation étanche de ladite ouverture supérieure (4) de ladite enceinte (1), laquelle comporte une conduite d'aspiration (9) de la récolte brute (R) débouchant dans ce récipient de stockage lequel est pourvu d'une ouverture d'éjection (5) connectée à la bouche d'aspiration (6) d'un appareil à faire le vide (7) permettant la mise en dépression dudit récipient de stockage (1) assurant l'aspiration et le tri de la récolte brute, ainsi que l'éjection des corps étrangers (CE) **caractérisé en ce que** la conduite d'aspiration (9) débouche dans la partie supérieure (1A) de l'enceinte étanche (1), de façon tangente à la surface interne (11a) de ladite paroi supérieure (11).

3. Dispositif de tri pneumatique de la récolte de petits fruits selon la revendication 2, **caractérisé en ce que** l'appareil à faire le vide (7) est constitué par une turbine centrifuge.

4. Dispositif de tri pneumatique de la récolte de petits fruits selon la revendication 2, **caractérisé en ce que** la surface interne (11a) de la paroi supérieure (11) du récipient (2) présente une forme concave permettant de diriger les corps étrangers légers (CE) extraits de la récolte brute (R) vers l'appareil à faire le vide.

5. Dispositif de tri pneumatique de la récolte de petits fruits, selon l'une des revendications 2 ou 3, **caractérisé en ce qu'il** comprend une conduite d'aspiration (9) dont la partie distale (10) pénètre à l'intérieur de la partie supérieure (1A) du récipient étanche (2) et se trouve orientée en direction de l'aspiration de l'appareil à faire le vide (7).

6. Dispositif de tri pneumatique de la récolte de petits fruits, selon l'une quelconque des revendications 2 à 5, **caractérisé en ce que** le récipient (2) est fixé avec une aptitude de basculement sur un châssis porteur (15).

7. Dispositif de tri pneumatique de la récolte de petits fruits selon la revendication 6, **caractérisé en ce que** la conduite d'aspiration (9) est constituée d'au moins deux tronçons séparables (9a, 9b), dont un tronçon supérieur (9a) rigidement solidaire du récipient (2), de sorte qu'en position de fermeture dudit récipient, les deux tronçons (9a, 9b) se trouvent assemblés de manière étanche, tandis qu'en position basculée d'ouverture dudit récipient, les deux tronçons (9a, 9b) sont désassemblés.

8. Dispositif de tri pneumatique de la récolte de petits fruits, selon l'une quelconque des revendications 2 à 7, **caractérisé en ce que** l'ouverture de vidage (4) est munie d'une trappe de vidage (3) fixée, avec une aptitude de liberté de basculement, à la partie supérieure de l'un des côtés du récipient (2) pourvu de ladite ouverture de vidage (4).

9. Dispositif de tri pneumatique selon la revendication 8, **caractérisé en ce que** l'axe d'articulation (8) de la trappe de vidage (3) et l'axe de basculement (21) de la benne (2) sont parallèles.

10. Dispositif de tri pneumatique de la récolte de petits fruits selon l'une quelconque des revendications 2 à 9, **caractérisé en ce qu'**un déflecteur réglable (12) est installé à distance réduite de l'appareil à faire le vide (7) pour favoriser l'action d'extraction des feuilles et des corps étrangers légers (CE).

11. Dispositif de tri pneumatique de la récolte de petits fruits selon la revendication 10, **caractérisé en ce qu'il** comporte un deuxième déflecteur (23) disposé fixement en regard du déflecteur réglable (12), à la base de l'appareil à faire le vide (7).

12. Machine de récolte de petits fruits, **caractérisée en ce qu'**elle comporte au moins un dispositif de tri pneumatique de la récolte selon l'une quelconque des revendications 2 à 11, ou permettant la mise en oeuvre du procédé selon la revendication 1.

13. Machine de récolte de petits fruits selon la revendication 12, du genre comportant, d'une part, une tête de récolte (13) comprenant un bâti enjambeur (14) en forme de portique fixé à un châssis porteur (15), ce bâti enjambeur supportant notamment un système de secouage constitué de deux ensembles (16) de détachement des fruits, montés en vis-à-vis et séparés par un espace ou couloir vertical, et, d'autre part, un système de réception (plancher traversable) et de convoyage pour recevoir les fruits détachés des arbres secoués, ce système comprenant deux sous-ensembles parallèles et contigus montés en partie basse du châssis porteur, de part et d'autre du plan vertical médian de la machine, chacun de ces sous-ensembles comprenant une demi-partie (17) du plancher traversable et un convoyeur à tapis horizontal (18) disposé sur le côté externe de ladite demi-partie du plancher traversable et sur lequel est déversée la récolte brute recueillie par ladite demi-partie, cette machine étant **caractérisée en ce qu'**elle comporte deux dispositifs pneumatiques installés latéralement de part et d'autre de son plan vertical médian et réalisant, à la fois, le convoyage de la récolte brute (R), le tri de celle-ci et le stockage des fruits triés (F), chacun de ces dispositifs comprenant un convoyeur élévateur pneumatique (9) constitué par une conduite tubulaire comportant une bouche d'aspiration inférieure (19) disposée en regard et à proximité de la partie aval du brin actif du convoyeur à tapis horizontal (18), et une partie distale déversante (10) débouchant dans la partie supérieure d'une benne de stockage basculante (1), de façon tangente à la surface interne (11a) de la paroi supérieure (11) de ladite benne de stockage (1), laquelle comporte une ouverture de vidage (4) munie d'une trappe de fermeture étanche (3) et une ouverture d'éjection (5) raccordée à un appareil à faire le vide (7), permettant la mise en dépression de ladite benne de stockage, de sorte à permettre l'aspiration des fruits (F) transportés par le convoyeur à tapis (18), leur déversement dans ladite benne de stockage (1), et leur chute par gravité en direction du fond de cette dernière à leur sortie du convoyeur élévateur pneumatique (9), les corps étrangers légers (CE) étant aspirés par ledit appareil`. à faire le vide et éjectés hors de ladite benne de stockage, à travers l'aspiration dudit appareil à faire le vide.

14. Machine de récolte de petits fruits, selon l'une des revendications 12 ou 13, **caractérisée en ce que** la partie inférieure ou partie amont du convoyeur élévateur pneumatique (9) ou de chaque convoyeur élévateur pneumatique (9) est munie d'une bouche d'appel d'air (20).

## Patentansprüche

1. Verfahren für das pneumatische Sortieren der Kleinobsternte, wobei die Bruttoernte (R), die aus Kleinobst (F), das von Bäumen gelöst wird, und Fremdkörpern (CE) verschiedenen Ursprungs (Blattstiele, Blätter, Blattfragmente, kleine Zweige, Insekten usw.), die mit den Früchten vermischt sind, besteht, in einen dichten Behälter (1) gesaugt wird, der eine obere Wand (11) umfasst und in dem ein Unterdruck mittels einer Vakuumquelle gehalten wird, die zum Beispiel aus einer Vakuumvorrichtung (7) besteht, wobei die Bruttoernte (R) in den dichten Behälter (1), der unter Unterdruck gehalten wird, mittels einer Saugleitung (9) für die Bruttoernte (R) befördert wird, die in den dichten Behälter (1) mündet, sodass das Kleinobst (F) bei seinem Austritt aus der Saugleitung durch die Schwerkraft in Richtung des Bodens des dichten Behälters fällt, während die Fremdkörper (CE) oder leichteren Abfälle von der Vakuumvorrichtung (7) angesaugt und aus dem Behälter über die Saugwirkung der Vorrichtung ausgeworfen werden, **dadurch gekennzeichnet, dass** die Saugleitung (9) in dem oberen Teil (1A) des dichten Behälters (1) angrenzend an die Innenfläche (11a) der oberen Wand (11) mündet.

2. Vorrichtung für das pneumatische Sortieren der Kleinobsternte, umfassend einen Behälter (1), der aus einem Aufnahmebehälter (2) besteht, der einen oberen Teil (1A), der durch eine obere Wand (11) abgeschlossen ist, und eine obere Entleerungsöffnung (4), die mit einer dichten Verschlussklappe (3) der oberen Öffnung (4) des Behälters (1) ausgestattet ist, umfasst, die eine Saugleitung (9) für die Bruttoernte (R) umfasst, die in dem Aufnahmebehälter mündet, der mit einer Auswurföffnung (5) ausgestattet ist, die mit dem Saugmund (6) einer Vakuumvorrichtung (7) verbunden ist, wodurch das Erzeugen eines Unterdrucks in dem Aufnahmebehälter (1) ermöglicht wird, wodurch das Ansaugen und das Sortieren der Bruttoernte sowie das Auswerfen der Fremdkörper (CE) gewährleistet wird, **dadurch gekennzeichnet, dass** die Saugleitung (9) in dem oberen Teil (1A) des dichten Behälters (1) angrenzend an die Innenfläche (11a) der oberen Wand (11) mündet.

3. Vorrichtung für das pneumatische Sortieren der Kleinobsternte nach Anspruch 2, **dadurch gekennzeichnet, dass** die Vakuumvorrichtung (7) aus einer Zentrifugalturbine besteht.

4. Vorrichtung für das pneumatische Sortieren der Kleinobsternte nach Anspruch 2, **dadurch gekennzeichnet, dass** die Innenfläche (11a) der oberen Wand (11) des Aufnahmebehälters (2) eine konkave Form aufweist, wodurch es ermöglicht wird, die leichten Fremdkörper (CE), die aus der Bruttoernte (R) entfernt wurden, zu der Vakuumvorrichtung zu leiten.

5. Vorrichtung für das pneumatische Sortieren der Kleinobsternte nach einem der Ansprüche 2 oder 3, **dadurch gekennzeichnet, dass** sie eine Saugleitung (9) umfasst, deren distaler Teil (10) in das Innere des oberen Teils (1A) des dichten Behälters (2) vorsteht und in Richtung der Saugwirkung der Vakuumvorrichtung (7) ausgerichtet ist.

6. Vorrichtung für das pneumatische Sortieren der Kleinobsternte nach einem der Ansprüche 2 bis 5, **dadurch gekennzeichnet, dass** der Aufnahmebehälter (2) kippbar auf einem Traggestell (15) befestigt ist.

7. Vorrichtung für das pneumatische Sortieren der Kleinobsternte nach Anspruch 6, **dadurch gekennzeichnet, dass** die Saugleitung (9) aus mindestens zwei trennbaren Abschnitten (9a, 9b) besteht, wobei ein oberer Abschnitt (9a) fest mit dem Aufnahmebehälter (2) verbunden ist, sodass die zwei Abschnitte (9a, 9b) bei geschlossener Stellung des Aufnahmebehälters dicht ineinandergefügt sind, während die zwei Abschnitte (9a, 9b) bei gekippter Stellung der Öffnung des Aufnahmebehälters voreinander getrennt sind.

8. Vorrichtung für das pneumatische Sortieren der Kleinobsternte nach einem der Ansprüche 2 bis 7, **dadurch gekennzeichnet, dass** die Entleerungsöffnung (4) mit einer Entleerungsklappe (3) ausgestattet ist, die ungehindert kippbar an dem oberen Teil einer der Seiten des Aufnahmebehälters (2), die mit der Entleerungsöffnung (4) ausgestattet ist, befestigt ist.

9. Vorrichtung für das pneumatische Sortieren nach Anspruch 8, **dadurch gekennzeichnet, dass** die Gelenkachse (8) der Entleerungsklappe (3) und die Kippachse (21) des Kippbehälters (2) parallel sind.

10. Vorrichtung für das pneumatische Sortieren der Kleinobsternte nach einem der Ansprüche 2 bis 9, **dadurch gekennzeichnet, dass** ein verstellbares Ablenkblech (12) in geringem Abstand zu der Vakuumvorrichtung (7) angebracht ist, um den Vorgang zum Entfernen von Blättern und Fremdkörpern (CE) zu begünstigen.

11. Vorrichtung für das pneumatische Sortieren der Kleinobsternte nach Anspruch 10, **dadurch gekennzeichnet, dass** sie ein zweites Ablenkblech (23) umfasst, das in Bezug auf das verstellbare Ablenkblech (12) fest an der Basis der Vakuumvorrichtung (7) angeordnet ist.

12. Erntemaschine für Kleinobst, **dadurch gekennzeichnet, dass** sie mindestens eine Vorrichtung für das pneumatische Sortieren der Ernte nach einem der Ansprüche 2 bis 11 umfasst oder die Umsetzung des Verfahrens nach Anspruch 1 ermöglicht.

13. Erntemaschine für Kleinobst nach Anspruch 12, einerseits umfassend einen Erntevorsatz (13), umfassend einen Stelzenrahmen (14) in Form eines Rahmens, der an einem Traggestell (15) befestigt ist, wobei der Stelzenrahmen insbesondere ein Schüttelsystem abstützt, das aus zwei Einheiten (16) zum Lösen von Früchten besteht, die daran einander gegenüberliegend und durch eine Lücke oder eine vertikale Bahn getrennt befestigt sind, und andererseits ein Aufnahme- (passierbarer Boden) und Fördersystem zur Aufnahme der von den geschüttelten Bäumen gelösten Früchte, wobei das System zwei parallele und aneinanderstoßende Untereinheiten umfasst, die an dem unteren Teil des Traggestells auf beiden Seiten der vertikalen mittleren Ebene der Maschine befestigt sind, wobei jede der Untereinheiten eine Hälfte (17) des passierbaren Bodens und eine Förderanlage mit horizontaler Matte (18) umfasst, die an der Außenseite der Hälfte des passierbaren Bodens angeordnet ist und auf welcher die durch die Hälfte gesammelte Bruttoernte ausgekippt wird, wobei die Maschine **dadurch gekennzeichnet ist, dass** sie zwei pneumatische Vorrichtungen umfasst, die seitlich auf beiden Seiten ihrer vertikalen mittleren Ebene angebracht sind und gleichzeitig die Förderung der Bruttoernte (R), das Sortieren dieser und die Aufnahme der sortierten Früchte (F) umsetzen, wobei jede der Vorrichtungen einen pneumatischen Schrägförderer (9) umfasst, der aus einer rohrförmigen Leitung, die einen unteren Saugmund (19) umfasst, der in Bezug auf den nachgelagerten Teil des Arbeitstrums der Förderanlage mit horizontaler Matte (18) und in dessen Nähe angeordnet ist, und einem abkippenden distalen Teil (10) besteht, der in den oberen Teil eines kippbaren Aufnahmebehälters (1) angrenzend an die Innenfläche (11a) der oberen Wand (11) des Aufnahmebehälters (1) mündet, der eine Entleerungsöffnung (4) umfasst, die mit einer dichten Verschlussklappe (3) und einer Auswurföffnung (5) ausgestattet ist, die mit einer Vakuumvorrichtung (7) verbunden ist, wodurch das Erzeugen eines Unterdrucks in dem Aufnahmebehälter ermöglicht wird, sodass das Ansaugen von Früchten (F), die von der Förderanlage mit Matte (18) transportiert werden, ihr Auskippen in den Aufnahmebehälter (1) und ihr Fallen durch die Schwerkraft in Richtung des Bodens des Letztgenannten, wenn sie den pneumatischen Schrägförderer (9) verlassen, ermöglicht werden, wobei die leichten Fremdkörper (CE) von der Vakuumvorrichtung angesaugt und aus dem Aufnahmebehälter über die Saugwirkung der Vakuumvorrichtung ausgeworfen werden.

14. Erntemaschine für Kleinobst nach einem der Ansprüche 12 oder 13, **dadurch gekennzeichnet, dass** der untere Teil oder der vorgelagerte Teil des pneumatischen Schrägförderers (9) oder jedes pneumatischen Schrägförderers (9) mit einem Mund zur Luftansaugung (20) ausgestattet ist.

## Claims

1. A process for pneumatically sorting the crop of small fruits, wherein the gross crop (R) composed of small fruits (F) detached from trees and foreign bodies (CE) of various origins (petioles, leaves, leaf fragments; twigs, insects, etc.) mixed with the fruits is sucked into a sealed enclosure (1) comprising an upper wall (11) and in which a depression is maintained by means of a vacuum source, for example formed by a vacuum-generating apparatus (7), the gross crop (R) being transported in said sealed enclosure (1) in which a depression is maintained by means of a suction conduit (9) for said gross crop (R) opening into said sealed enclosure (1) in such a way that, when they issue from said suction conduit, the small fruits (F) fall under the force of gravity in the direction of the bottom of the sealed enclosure while the foreign bodies (CE) or lighter waste are sucked by the vacuum-generating apparatus (7) and ejected from said enclosure by way of the suction of said apparatus, **characterised in that** the suction conduit (9) opens into the upper part (1A) of the sealed enclosure (1) tangentially relative to the internal surface (11a) of said upper wall (11).

2. A device for pneumatically sorting the crop of small fruits comprising an enclosure (1) formed by a storage container (2) comprising an upper part (1A) closed by an upper wall (11) and an upper emptying opening (4) provided with a flap (3) for sealingly closing said upper opening (4) of said enclosure (1), which comprises a suction conduit (9) for the gross crop (R) opening into said storage container which is provided with an ejection opening (5) connected to the suction mouth (6) of a vacuum-generating apparatus (7) permitting a depression to be generated in said storage container (1) ensuring suction intake and sorting of the gross crop, as well as ejection of the foreign bodies (CE), **characterised in that** the suction conduit (9) opens into the upper part (1A) of the sealed enclosure (1) tangentially relative to the internal surface (11a) of said upper wall (11).

3. A device for pneumatically sorting the crop of small fruits according to claim 2 **characterised in that** the vacuum-generating apparatus (7) is formed by a centrifugal turbine.

4. A device for pneumatically sorting the crop of small fruits according to claim 2 **characterised in that** the internal surface (11a) of the upper wall (11) of the container (2) is of a concave shape permitting the light foreign bodies (CE) extracted from the gross crop (R) to be directed towards the vacuum-generating apparatus.

5. A device for pneumatically sorting the crop of small fruits according to one of claims 2 and 3 **characterised in that** it comprises a suction conduit (9) whose distal part (10) penetrates into the interior of the upper part (1A) of the sealed container (2) and is oriented in the direction of the suction intake of the vacuum-generating apparatus (7).

6. A device for pneumatically sorting the crop of small fruits according to any one of claims 2 to 5 **characterised in that** the container (2) is fixed with a capability of pivotal movement on a carrier frame (15).

7. A device for pneumatically sorting the crop of small fruits according to claim 6 **characterised in that** the suction conduit (9) is formed by at least two separable portions (9a, 9b) of which an upper portion (9a) is rigidly fixed with respect to the container (2) in such a way that in the closure position of said container the two portions (9a, 9b) are sealingly assembled while in the pivoted open position of said container the two portions (9a, 9b) are disassembled.

8. A device for pneumatically sorting the crop of small fruits according to any one of claims 2 to 7 **characterised in that** the emptying opening (4) is provided with an emptying flap (3) fixed with a capability of freedom of pivotal movement to the upper part of one of the sides of the container (2) which is provided with said emptying opening (4).

9. A device for pneumatic sorting according to claim 8 **characterised in that** the pivot axis (8) of the emptying flap (3) and the pivot axis (21) of the tub (2) are parallel.

10. A device for pneumatically sorting the crop of small fruits according to any one of claims 2 to 9 **characterised in that** a regulatable deflector (12) is installed at a reduced spacing from the vacuum-generating apparatus (7) to promote the action for extraction of the leaves and light foreign bodies (CE).

11. A device for pneumatically sorting the crop of small fruits according to claim 10 **characterised in that** it comprises a second deflector (23) disposed fixedly facing the regulatable deflector (12) at the base of the vacuum-generating apparatus (7).

12. A machine for harvesting a crop of small fruits **characterised in that** it comprises at least one device for pneumatically sorting the crop according to any one of claims 2 to 11 or permitting the process according to claim 1 to be carried out.

13. A machine for harvesting a crop of small fruits according to claim 12 of the kind comprising on the one hand a crop harvesting head (13) comprising a straddling frame structure (14) in the form of a gantry fixed to a carrier frame (15), said straddling frame structure supporting in particular a shaker system formed by two fruit detachment assemblies (16) mounted in facing relationship and separated by a vertical space or corridor and on the other hand a reception and conveying system (traversable floor) for receiving the fruits detached from the shaken trees, said system comprising two parallel and contiguous sub-assemblies mounted in the lower part of the carrier frame on respective sides of the vertical central plane of the machine, each of said sub-assemblies comprising a half (17) of the traversable floor and a horizontal belt conveyer (18) disposed on the external side of said half of the traversable floor and on to which the gross crop collected by said half is discharged, said machine being **characterised in that** it comprises two pneumatic devices installed laterally on respective sides of its vertical central plane and implementing both conveying of the gross crop (R), sorting thereof and storage of the sorted fruits (F), each of said devices comprising a pneumatic elevator conveyor (9) formed by a tubular conduit comprising a lower suction intake mouth (19) disposed facing and in the proximity of the downstream part of the active run of the horizontal belt conveyor (18) and a distal discharging path (10) opening into the upper part of a pivoting storage tub (1) tangentially relative to the internal surface (11a) of the upper wall (11) of said storage tub (1), which comprises an emptying opening (4) provided with a sealing closure flap (3) and an ejection opening (5) connected to a vacuum-generating apparatus (7) permitting a depression to be generated in said storage tub so as to permit suction intake of the fruits (F) transported by the belt conveyor (18), discharge thereof into said storage tub (1) and the drop thereof under the force of gravity in the direction of the bottom of the latter at their discharge from the pneumatic elevator conveyor (9), the light foreign bodies (CE) being sucked in by said vacuum-generating apparatus and ejected from said storage tub by way of the suction of said vacuum-generating apparatus.

14. A machine for harvesting a crop of small fruits according to one of claims 12 and 13 **characterised in that** the lower part or upstream part of the pneumatic elevator conveyor (9) or each pneumatic elevator conveyor (9) if provided with an air make-up intake opening (20).
